# EUROPEAN PATENT APPLICATION

(11) **EP 3 306 288 A1**
(43) Date of publication of application: **11.04.2018**
(21) Application number: 17185864.0
(22) Date of filing: 11.08.2017
(51) Int. Cl.: G01J 1/02, G01J 5/04, G01J 5/06, H05K 1/02

(54) **INFRARED DETECTION DEVICE**

(30) Priority: 06.10.2016 JP 2016198152
(71) Applicant: Panasonic Intellectual Property Management Co., Ltd., Osaka-shi, Osaka 540-6207 (JP)
(72) Inventor: MIYAMAE, Nobuhiko, Osaka, 540-6207 (JP); HAMADA, Shingo, Osaka, 540-6207 (JP); MIYAJI, Naoya, Osaka, 540-6207 (JP)
(74) Representative: Vigand, Philippe

(57) **Abstract**

There is provided an infrared detection device including an infrared detector (1) and a fixing tool (2). The infrared detector (1) includes an infrared detection element and a metal case (17). The fixing tool (2) includes a first plate (4), a second plate (5), a third plate (6), and an amplification substrate (3). The infrared detector (1) is held by the first plate (4) and the second plate (5). The second plate (5) is electrically connected to the third plate (6). The third plate (6) is electrically connected to an analog ground portion of the amplification substrate (3). A potential of the metal case (17) is the same as an analog ground potential of the analog ground portion of the amplification substrate (3).

## Description

### BACKGROUND

### 1. Technical Field

The present disclosure relates to an infrared detection device capable of detecting even infrared rays, such as diffusion reflected light, for which the amount of light received is small, with a high level of accuracy.

### 2. Description of the Related Art

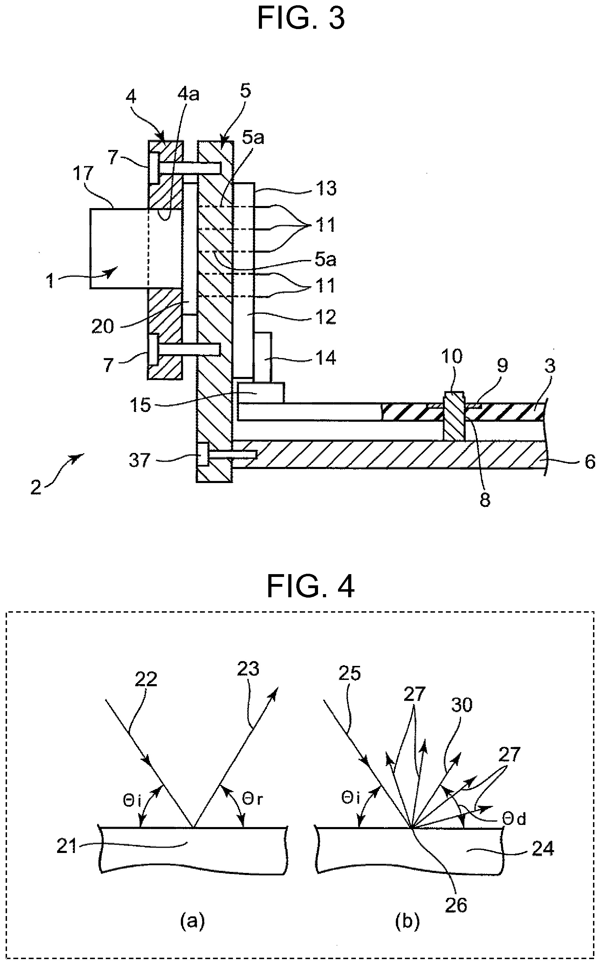

First, a state of reflection of infrared rays on the surface of an object will be described with reference to FIG. 4. FIG. 4 is a schematic diagram illustrating a state of reflection of infrared rays on the surface of an object. FIG. 4A is a schematic diagram illustrating a state of direct reflection of infrared rays on the surface of an object. FIG. 4B is a schematic diagram illustrating a state of diffusion reflection of infrared rays on the surface of an object. In FIG. 4A, when first incident light 22 which is an infrared ray is reflected from the surface of first object 21, first reflected light 23 (direct reflected light) is reflected in a direction in which angle θi and angle θr becomes equal to each other. Here, angle θi is an angle formed by the optical axis of first incident light 22 and the surface of first object 21. Angle θr is an angle formed by the optical axis of first reflected light 23 and the surface of first object 21. In a case where the surface of first object 21 is flat, the reflection of angle θr in the same direction as angle θi is predominant, like first reflected light 23.

On the other hand, in FIG. 4B, not only direct reflected light 30 having angle θd in the same direction as angle θi but also second diffusion reflected light 27 is also present in a direction (that is, a direction in which angle θd is not formed) which is not the same as angle θi. In a case where the surface of second object 24 is not flat, particularly, is rough, second incident light 25 looks like being reflected in various directions. Hereinafter, such reflected light will be referred to as diffusion reflected light.

An infrared detection device of the related art for receiving direct reflected light is disclosed in, for example, PTL 1. FIG. 5 is a diagram illustrating a configuration of an infrared detection device mounted on an infrared type gas analysis device disclosed in PTL 1. FIG. 5 schematically illustrates an infrared detection device that receives direct reflected light. An infrared laser (not shown) is used as an infrared light source, and infrared detector 41 receives direct reflected light 32 obtained by reflecting infrared rays emitted from the infrared laser inside multi-cell path 31. With such a configuration, infrared detector 41 is installed on the path of direct reflected light 32 so that the intensity of infrared rays received by infrared detector 41 is maximized. As the infrared laser, a laser of a mid-infrared region having a wavelength of equal to or greater than 5 µm is used.

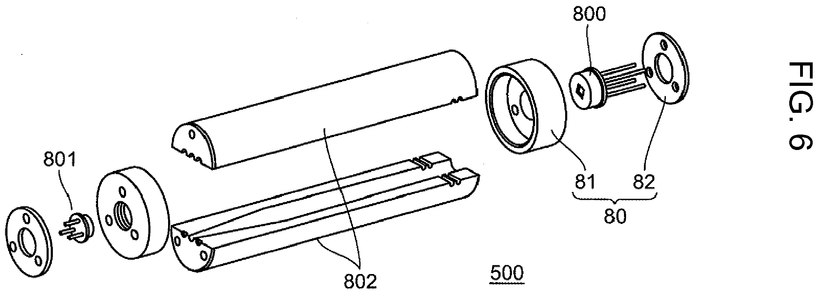

However, it is not possible to directly receive the direct reflected light depending on the state of the surface of the object or a light source to be used, and there may be no choice but to receive diffusion reflected light. In FIG. 4B, second diffusion reflected light 27 is emitted from reflection point 26. An infrared detection device of the related art for receiving emitted infrared rays is disclosed in, for example, PTL 2. FIG. 6 illustrates infrared detection device 500, disclosed in PTL 2, which receives diffusion reflected light. A fixing mechanism of infrared detection device 500 illustrated in FIG. 6 is mounted on an infrared type gas sensor, and infrared detector 800 is fixed by holding member 80 constituted by gap portion 81 and pressing plate 82. Sample cell 802 of infrared detection device 500 is configured to reflect infrared rays radiated from infrared light source 801 toward infrared detector 800, and the inside of sample cell 802 has a spheroidal shape. Infrared light source 801 is disposed at one focusing position of the spheroid on the central axis of sample cell 802. Infrared detector 800 is disposed on a side closer to infrared light source 801 than the other focusing position of the spheroid on the central axis of sample cell 802. With such a configuration (hereinafter, referred to as an ellipsoid waveguide), infrared rays emitted from infrared light source 801 are efficiently collected in infrared detector 800 to secure the amount of light.

Further, an infrared detection device receiving infrared rays while scanning a reflection point of diffusion reflected light may also be required. As an example, PTL 3 discloses an infrared detection device used in a recycling material selection device. FIG. 7 is a schematic diagram illustrating an infrared detection device mounted on the recycling material selection device disclosed in PTL 3. Diffusion reflected light is received by an infrared detector (not shown) while scanning a reflection point of the diffusion reflected light with a scanning width of 1 m by polygon rotation mirror 170. The wavelength of infrared ray to be received is a near infrared rays region of equal to or greater than 1.40 µm and equal to or less than 2.50 µm.

Next, the amount of light and noise when direct reflected light or diffusion reflected light of infrared rays is received by an infrared detection element will be described. The noise is defined as an output of the infrared detection device under background radiation of 300K. The infrared detection element generates an electrical signal in response to the power of the received infrared rays. The generated electrical signal is generally amplified by an amplification circuit. However, at this time, noise is amplified at the same time. Accordingly, in a case where a highly accurate infrared detector is realized, noise is required to be sufficiently made small with respect to the electrical signal based on the amount of light received by the infrared detection element.

First, a description will be given of a configuration and operation in a case where direct reflected light is detected by an infrared detection element when high directivity infrared rays such as a laser beam are incident on an object. In this case, the amount of light received by the infrared detection element is maximized by adopting a configuration in which the center of the infrared detection element is set to be coaxial with the optical axis of the direct reflected light. However, in a case where the emitted diffusion reflected light is received, a loss in the power of reflected light is increased depending on the size of the infrared detection element. For example, in a case where the diffusion reflected light is set to be uniformly emitted on a hemisphere centering on a reflection point, the infrared detection element is installed at a location 100 mm away from the reflection point, and one side of a square is 1.0 mm as the size of the infrared detection element, power received by the infrared detection element is 1.0²/(2×3.14×100²) times, that is, 1.6×10⁻⁵ times the power of the entire reflected light, which is an amount extremely smaller than that in a case where direct reflected light with a small power loss is received.

### Citation List

### Patent Literature

PTL 1: Pamphlet of International Publication No. 2015/033582
PTL 2: Japanese Patent Unexamined Publication No. 2015-75384
PTL 3: Pamphlet of International Publication No. 2012/035785

### SUMMARY

There is provided an infrared detection device including an infrared detector and a fixing tool.

The infrared detector includes an infrared detection element and a metal case.

The infrared detection element receives infrared rays.

The metal case accommodates the infrared detection element and includes a flange on an outer surface thereof.

The fixing tool includes a first plate, a second plate, a third plate, and an amplification substrate.

The first plate has a through hole.

The third plate has an analog ground potential, and is connected to the second plate so as to intersect the second plate.

The amplification substrate is supported by the third plate.

The metal case passes through the through hole of the first plate, and the flange is sandwiched between the first plate and the second plate, so that the infrared detector is held by the first plate and the second plate.

The second plate is electrically connected to the third plate.

The third plate is electrically connected to an analog ground portion of the amplification substrate.

A potential of the metal case is the same as an analog ground potential of the analog ground portion of the amplification substrate.

### BRIEF DESCRIPTION OF THE DRAWINGS

FIG. 1 is a schematic diagram of an infrared detection device according to an embodiment;
FIGS. 2A and 2B are schematic diagrams of an infrared detector according to the embodiment;
FIG. 3 is a partial cross-sectional view of the infrared detection device according to the embodiment;
FIGS. 4A and 4B are schematic diagrams illustrating a state of reflection of infrared rays on the surface of an object;
FIG. 5 is a schematic diagram of an infrared detection device of the related art which receives direct reflected light;
FIG. 6 is a schematic diagram of an infrared detection device of the related art which receives diffusion reflected light; and

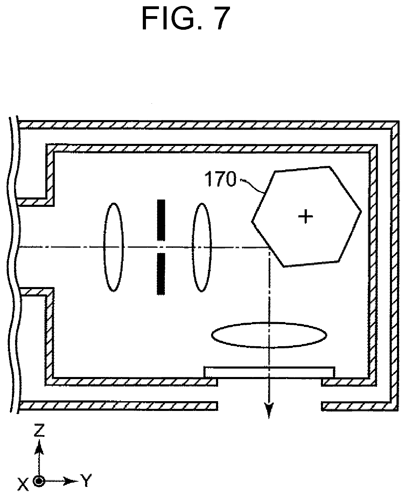

FIG. 7 is a schematic diagram of a near infrared rays scanning unit included in a near infrared detection device of the related art.

### DETAILED DESCRIPTION

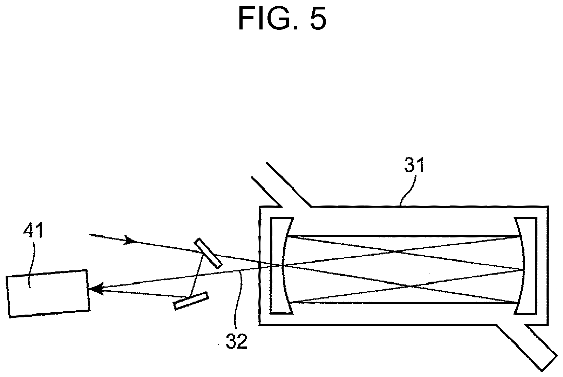

Prior to a description of an embodiment, a problem of an infrared detection device of the related art will be briefly described. In an infrared detection device of FIG. 5, it is possible to increase the amount of direct reflected light 32 by capturing direct reflected light 32 within multi-cell path 31, but it is difficult to capture diffusion reflected light within multi-cell path 31. For this reason, it is not possible to increase the amount of diffusion reflected light. Further, in the infrared detection device of FIG. 5, an infrared detector in a mid-infrared region is used. Accordingly, an S/N ratio of the infrared detector is equal to or less than 1000 times in many cases, as compared to an infrared detector in a near infrared rays region, and diffusion reflected light in the mid-infrared region is received. For this reason, there have been demands for the development of a highly accurate infrared detection device with less noise.

In infrared detection device 500 of FIG. 6, it is possible to secure the amount of light by efficiently collecting diffusion reflected light, emitted from infrared light source 801, in infrared detector 800 by sample cell 802 of an ellipsoid waveguide, and to increase the amount of diffusion reflected light. However, sample cell 802 of the ellipsoid waveguide is required. For this reason, this results in a complex and large-scale configuration, and thus it is difficult to perform handling such as scanning.

In infrared detection device 500, it is difficult to move sample cell 802 of the ellipsoid waveguide in a case where an infrared detection device receiving infrared rays while scanning a reflection point of diffusion reflected light is required. For this reason, there have been demands for the development of an infrared detection device capable of increasing the amount of diffusion reflected light with a simple configuration.

Hereinafter, an embodiment of this disclosure will be described with reference to the accompanying drawings.

### Embodiment

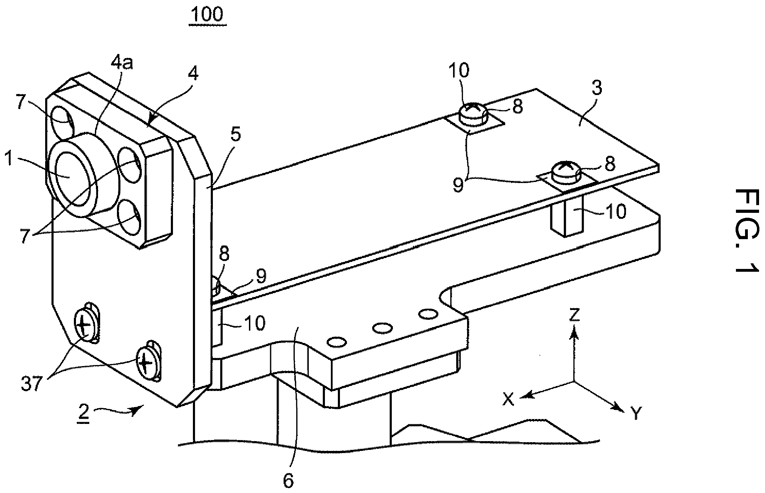

FIG. 1 is a schematic diagram of infrared detection device 100 according to an embodiment.

Infrared detection device 100 is configured to include infrared detector 1 receiving infrared rays, amplification substrate 3 (amplification substrate for an infrared detector), and conductive fixing tool 2. Amplification substrate 3 generates an electrical signal in response to the power of infrared rays received when the infrared rays are received by infrared detector 1, and amplifies the generated electrical signal by an amplification circuit.

Fixing tool 2 is a member for fixing and holding infrared detector 1 and amplification substrate 3. As an example, fixing tool 2 is configured to include first plate 4 having a conductive (for example, metal) rectangular plate shape, second plate 5 having a conductive (for example, metal) rectangular plate shape, and third plate 6 having a conductive (for example, metal) rectangular plate shape. First plate 4 and second plate 5 hold infrared detector 1. Third plate 6 supports amplification substrate 3. Second plate 5 and third plate 6 are electrically connected to each other so as to intersect each other (for example, perpendicular to each other).

As illustrated in FIG. 1, fixing tool 2 may further include plurality of screws 7 and plurality of conductive supports 10. As an example, first plate 4 is disposed on the surface of second plate 5 so as to be parallel to the second plate, and is fixed using plurality of screws 7. Third plate 6 is connected to an analog ground so that an analog ground potential is maintained. Third plate 6 is disposed at a lower portion on the rear surface (side opposite to the first plate) of second plate 5 so as to be perpendicular to second plate 5, and is fastened and fixed by plurality of (for example, two) screws 37.

Amplification substrate 3 is supported on third plate 6 using plurality of (for example, four) conductive (for example, metal) supports 10. For example, each of supports 10 is erected in the vicinity of the corner portion of rectangular third plate 6. For example, plurality of circular substrate installation holes 8 are formed in amplification substrate 3, and the upper portions of supports 10 are fixed by being respectively inserted into plurality of substrate installation holes 8. Accordingly, land 9 which is disposed in the vicinity of substrate installation hole 8 of amplification substrate 3 and functions as an example of an analog ground portion, and support 10 are electrically connected to each other. With such a configuration, land 9 (that is, an example of an analog ground portion) in the vicinity of substrate installation hole 8 is electrically connected to an analog ground through support 10 and third plate 6, and the potential of land 9 is the same as the analog ground potential. For this reason, the potential of metal case 17 and the analog ground potential of land 9 of amplification substrate 3 are set to be the same as each other through second plate 5, third plate 6, and support 10.

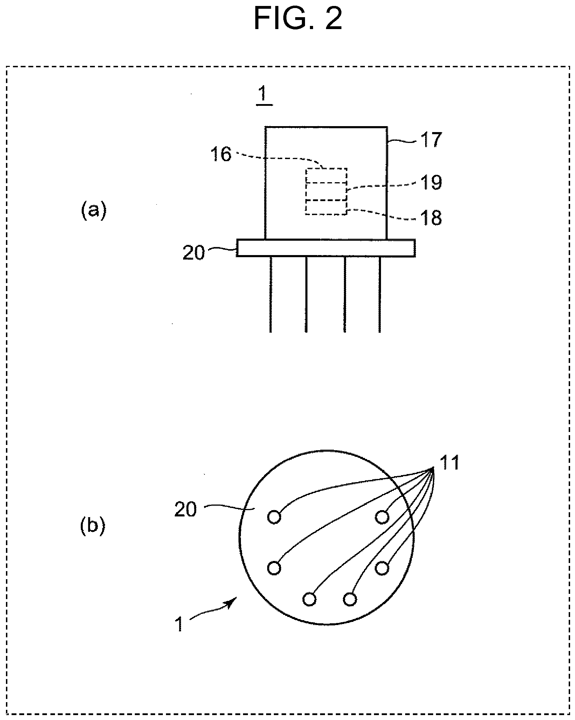

FIG. 2 is a schematic diagram of infrared detector 1 according to the embodiment. FIG. 2A is a side view of infrared detector 1. FIG. 2B is a bottom view of infrared detector 1.

In infrared detector 1, for example, InSb type infrared detection element 16, electronic cooling element 18, and thermistor 19 are built into cylindrical metal case 17 with a lid. As noise of InSb type infrared detection element 16 decreases, it is possible to accurately detect infrared rays with a small amount of light. Noise decreases as the temperature of infrared detection element 16 decreases. For this reason, it is preferable that electronic cooling element 18 is brought into contact with infrared detection element 16 to be installed within metal case 17 so that the temperature of infrared detection element 16 is reduced and noise is reduced. It is preferable that thermistor 19 is installed within metal case 17 in order to measure the temperature of infrared detection element 16.

As an example, two leads 11 for extracting the electrical signal, generated in response to the received amount of light, to the outside of infrared detector 1 are connected to infrared detection element 16. As an example, two leads 11 are also connected to each of electronic cooling element 18 and thermistor 19. Accordingly, in this example, a total of six leads 11 protrude downward metal case 17. As illustrated in FIG. 3, lead 11 penetrates second plate 5 and small substrate 12. Portions of second plate 5 and small substrate 12 which are penetrated by lead 11 are covered with at least an insulator.

Lead 11 extends more than a lower end of the outer circumferential surface of metal case 17. Metal case 17 has a cylindrical shape. Cylindrical flange 20, made of a metal, which protrudes from the outer circumferential surface of metal case 17 is formed in a connection portion between metal case 17 and lead 11 so that the cross-section of the connection portion becomes larger than the above-described cylindrical region. As an example, the thickness of flange 20 is approximately equal to or greater than 0.5 mm and equal to or less than 1.0 mm.

First plate 4 includes circular through hole 4a through which flange 20 of infrared detector 1 cannot pass and the portion of metal case 17, except for flange 20, can pass. Second plate 5 includes through holes 5a through which respective leads 11 of infrared detector 1 pass. Accordingly, first plate 4 and second plate 5 are fastened and fixed using plurality of (for example, four) screws 7 in a state where metal case 17 passes through through hole 4a and leads 11 pass through through holes 5a so that flange 20 of infrared detector 1 is sandwiched between first plate 4 and second plate 5. With such a configuration, infrared detector 1 is held by being fixed into infrared detection device 100.

As an example, the outer diameter of the cylindrical portion of metal case 17 is approximately equal to or greater than 10 mm and equal to or less than 20 mm, and the height of the cylindrical portion is set to be approximately equal to or greater than 5 mm and equal to or less than 10 mm. As an example, the outer diameter of flange 20 is approximately 1 mm larger than the outer diameter of metal case 17. As an example, as the size of infrared detection element 16, one side of a square is set to be approximately equal to or greater than 0.5 mm and equal to or less than 2.0 mm. As infrared detection element 16 becomes larger, infrared rays can be received in a wider region, and thus the amount of infrared rays received increases. However, the magnitude of noise also increases as infrared detection element 16 becomes larger.

Next, electrical connection between infrared detector 1 and amplification substrate 3 will be described with reference to FIG. 3.

Small substrate 12 is disposed on the rear surface of second plate 5. In a state where flange 20 of infrared detector 1 is sandwiched between first plate 4 and second plate 5, leads 11 pass through second plate 5 and small substrate 12 and are soldered to the terminal of small substrate 12. It is preferable that leads 11 are soldered in a state of protruding from one end face (for example, the rear surface in FIG. 3) 13 of small substrate 12 by approximately equal to or greater than 2 mm and equal to or less than 3 mm (hereinafter, referred to as a soldering length). First connector 14 including a connection terminal corresponding to lead 11 (that is, the terminal of small substrate 12) of infrared detector 1 is mounted on end face 13 of small substrate 12. First connector 14 of small substrate 12 and second connector 15 of amplification substrate 3 are electrically connected to each other, and thus infrared detector 1 and amplification substrate 3 are electrically connected to each other.

According to infrared detection device 100 of the embodiment, it is possible to reduce noise mixed from metal case 17 with a simple configuration in which second plate 5, third plate 6, support 10, and land 9 are electrically connected to each other so that the potential of metal case 17 and the analog ground potential of amplification substrate 3 are set to be the same potential.

Second plate 5 is made to have a small thickness of, for example, equal to or greater than 3 mm and equal to or less than 4 mm, and thus it is also possible to reduce the length of lead 11 to approximately equal to or greater than twice and equal to or less than 2.7 times the thickness of second plate 5, and to reduce noise mixed from lead 11.

Further, it is possible to reduce noise by controlling the temperature of infrared detection element 16 to a low temperature by electronic cooling element 18 built into infrared detector 1. At this time, it is necessary to radiate heat absorbed from infrared detection element 16 by electronic cooling element 18. However, it may be insufficient with only heat radiation based on the volume and surface integration of metal case 17 of infrared detector 1, and thus it is possible to radiate heat through second plate 5 made of a metal. The volume and surface area of second plate 5 increase as the thickness of second plate 5 increases, which leads to excellent heat radiation. However, it is necessary to increase the length of lead 11 for soldering to small substrate 12. That is, there is a trade-off relation between heat radiation and the length of the lead length. It is confirmed that it is possible to secure heat radiation for maintaining infrared detection element 16 at -35 degrees or less through various experiments, for example, the setting of the thickness of second plate 5 to equal to or greater than 3 mm and equal to or less than 4 mm and the setting of the thickness of small substrate 12 to 1.6 mm after securing a soldering length of 2 mm. In a case where the thickness of second plate 5 is less than 3 mm, heat radiation is deteriorated. On the other hand, in a case where the thickness of second plate 5 exceeds 4 mm, a long lead is necessary, and thus noise mixed from the lead is increased. For this reason, it is preferable that the thickness of second plate 5 is set to equal to or greater than 3 mm and equal to or less than 4 mm. The thickness of small substrate 12 is not related to heat radiation.

In this manner, it is possible to reduce the length of lead 11 up to 8 mm (length of approximately equal to or greater than twice and equal to or less than 2.7 times the thickness of second plate 5) with a configuration in which second plate 5 is set to have a small thickness of equal to or greater than 3 mm and equal to or less than 4 mm. As a result, it is confirmed through the experiments that noise can be reduced by 20% or more, as compared to when the length of lead 11 is 100 mm.

A reduction in noise and an improvement in heat radiation are achieved by infrared detection device 100 having the above-described simple configuration, and thus it is possible to accurately detect even infrared rays, such as diffusion reflected light, for which the amount of light received is small with a simple structure, without using a complex and large-scale configuration such as the structure of an ellipsoid waveguide.

It is possible to exhibit effects of each of the above-described various examples by appropriately combining the examples with each other.

According to the infrared detection device of this disclosure, the potential of the metal case of the infrared detector and the analog ground potential of the amplification substrate (amplification substrate for an infrared detector) are set to be the same potential, and thus it is possible to realize the infrared detection device with less noise. As a result, it is possible to accurately detect even infrared rays, such as diffusion reflected light, for which the amount of light received is small with a simple structure.

The infrared detection device of this disclosure is useful as a highly accurate infrared detection device that detects even infrared rays, such as diffusion reflected light, for which the amount of light received is small with a simple structure, without using the structure of an ellipsoid waveguide. The infrared detection device can also be applied to a case where infrared rays are received while scanning a reflection point of diffusion reflected light.

## Claims

1. An infrared detection device comprising:
an infrared detector including:
an infrared detection element receiving infrared rays; and
a metal case accommodating the infrared detection element and including a flange on an outer surface thereof; and
a conductive fixing tool including:
a first plate having a through hole;
a second plate;
a third plate having an analog ground potential and connected to the second plate so as to intersect the second plate; and
an amplification substrate supported by the third plate,
wherein the metal case passes through the through hole of the first plate and the flange is sandwiched between the first plate and the second plate, so that the infrared detector is held by the first plate and the second plate,
wherein the second plate is electrically connected to the third plate,
wherein the third plate is electrically connected to an analog ground portion of the amplification substrate, and
wherein a potential of the metal case is the same as an analog ground potential of the analog ground portion of the amplification substrate.

2. The infrared detection device of Claim 1,
wherein the infrared detector includes an electronic cooling element inside the metal case.

3. The infrared detection device of Claim 1,
wherein the infrared detector includes a thermistor inside the metal case.

4. The infrared detection device of Claim 1,
wherein the amplification substrate includes a substrate installation hole and a land in a vicinity of the substrate installation hole, and
wherein a conductive support erected in the third plate is fixed by being inserted into the substrate installation hole, and the land and the third plate are electrically connected to each other through the support, so that the land is set to have the analog ground potential.

5. The infrared detection device of Claim 1,
wherein a thickness of the second plate is equal to or greater than 3 mm and equal to or less than 4 mm.

6. The infrared detection device of Claim 1,
wherein the infrared detector includes a lead penetrating the second plate, and a length of the lead is equal to or greater than twice and equal to or less than 2.7 times a thickness of the second plate.
